# EUROPEAN PATENT APPLICATION

(11) **EP 4 604 300 A1**
(43) Date of publication of application: **20.08.2025**
(21) Application number: 23925720.7
(22) Date of filing: 07.03.2023
(51) Int. Cl.: H01M 50/457, H01M 50/449

(54) **SEPARATOR AND PREPARATION METHOD, BATTERY, AND ELECTRIC DEVICE**

(71) Applicant: Contemporary Amperex Technology (Hong Kong) Limited, Hong Kong (HK)
(72) Inventor: LIU, Feng, Ningde, Fujian 352100 (CN); FAN, Yulei, Ningde, Fujian 352100 (CN); ZHONG, Wei, Ningde, Fujian 352100 (CN); GE, Xiaoming, Ningde, Fujian 352100 (CN); OUYANG, Chuying, Ningde, Fujian 352100 (CN)
(74) Representative: Jacob, Reuben Ellis
(86) International application number: PCT/CN2023/080051
(87) International publication number: WO 2024/182996

(57) **Abstract**

The present application provides a separator and a preparation method, a battery, and an electric device. The separator comprises a first separator substrate and a modification layer disposed on a surface of the first separator substrate. The modification layer contains doped graphene oxide, and the electronegativity of dopant atoms in the doped graphene oxide is greater than or equal to 2.

## Description

### TECHNICAL FIELD

This application relates to the field of batteries, and specifically to a separator and a preparation method, a battery, and a power consuming apparatus.

### BACKGROUND

The statement herein merely provides background information related to this application and does not necessarily constitute the prior art.

During use of a battery, with the intercalation of lithium ions at a negative electrode, the problem of lithium plating occurs inevitably at the negative electrode. As the problem of lithium plating occurs, lithium dendrites are generated on a surface of a negative electrode plate, and the growth of lithium dendrites may damage a solid electrolyte interface film, resulting in reduced cycle performance of the battery. Therefore, the problem of lithium plating is an important factor that restricts the performance of the battery. To reduce the degree of lithium plating at the negative electrode, a conventional manner usually starts with the negative electrode, and the degree of lithium plating is mainly reduced by improving the material of the negative electrode. However, with continuous in-depth research on the negative electrode, a bottleneck in the improvement method gradually emerges. In this case, how to further mitigate the problem of lithium plating is of great significance to the further improvement of the performance of the battery.

### SUMMARY

In view of the foregoing problems, this application provides a separator and a preparation method, a battery, and a power consuming apparatus.

To achieve the foregoing objective, this application provides a separator, including a first separator substrate and a modification layer disposed on a surface of the first separator substrate. The modification layer contains doped graphene oxide, and an electronegativity of dopant atoms in the doped graphene oxide is greater than or equal to 2.

In this application, through the design of the separator, the modification layer that contains the doped graphene oxide is arranged on the surface of the separator substrate, and the electronegativity of the dopant atoms in the doped graphene oxide is greater than or equal to 2. The separator is applied to a secondary battery, and the dopant atoms have a strong electronegativity and can have a particular inducing effect on the transport of lithium ions, so that the lithium ions are close to the separator to a particular extent, which can play a particular regulating effect on the deposition of lithium ions on a surface of a negative electrode, improve the uniformity of the deposition of lithium ions on the surface of the negative electrode, and reduce the degree of lithium plating, thereby providing a new idea for reducing the degree of lithium plating on the negative electrode.

In some embodiments, a mass percentage of the dopant atoms in the doped graphene oxide ranges from 1% to 15%. The mass percentage of the dopant atoms in the doped graphene oxide is within the foregoing range, which can reduce the following risks: too few dopant atoms make it difficult to reflect the doping effect of the dopant atoms, and an excessively large mass percentage of dopant atoms in the doped graphene oxide may damage the intrinsic structure of the graphene oxide, reduce the number of oxidized functional groups on a surface of the graphene oxide, reduce the lyophilicity of the graphene oxide, and restrict the improvement of electrolytic solution wettability.

In some embodiments, the dopant atoms include at least one of F atoms, N atoms, S atoms, and B atoms. These dopant atoms have a good inducing effect on the transport of lithium ions, making it convenient to regulate the transport of lithium ions. In addition, sources of these dopant atoms are readily available, making it convenient to obtain the corresponding doped graphene oxide.

In some embodiments, the doped graphene oxide includes at least one of particle doped graphene oxide and sheet doped graphene oxide. The particle doped graphene oxide and the sheet doped graphene oxide can provide large voids for the transport of lithium ions, which is beneficial to improving the ionic conductivity of the separator.

In some embodiments, Dv50 of the particle doped graphene oxide ranges from 0.5 µm to 5 µm. When Dv50 of the particle doped graphene oxide is within the foregoing range, the particle doped graphene oxide is not easy to permeate to the other side of the first separator substrate, which is conducive to maintaining the structural stability of the separator.

In some embodiments, the sheet doped graphene oxide has a thickness ranging from 0.5 nm to 3 nm and a sheet diameter ranging from 0.2 µm to 10 µm. When the thickness and the sheet diameter of the sheet doped graphene oxide are within the foregoing ranges, the sheet doped graphene oxide is not easy to permeate to the other side of the first separator substrate, which is conducive to maintaining the structural stability of the separator.

In some embodiments, a porosity of the modification layer ranges from 5% to 30%. When the porosity of the modification layer is within the range, a larger porosity can be provided for the separator, which is conducive to accelerating the transport of lithium ions, thereby further improving the performance of the battery.

In some embodiments, a thickness of the modification layer ranges from 2 µm to 5 µm. If the thickness of the modification layer is excessively small, the effect of improving the performance of the separator is poor, and if the thickness of the modification layer is excessively large, the thickness of the separator may be excessively increased, causing an increase in the volume of the battery.

In some embodiments, a material of the first separator substrate includes a polymer material. The polymer material can improve the isolation effect of the separator, which is conducive to improving the stability inside the battery.

In some embodiments, the polymer material includes at least one of polypropylene, polyethylene, polyamide, polyester, polytetrafluoroethylene, polyvinylidene fluoride, and polyvinyl chloride. These polymer materials have stable properties and widely and readily available sources.

In some embodiments, a weight average molecular weight of the polymer material ranges from 100,000 to 1,000,000. If the weight average molecular weight is excessively small, the performance of the polymer material may be poor, and if the weight average molecular weight is excessively large, the polymer material may have excessively high processing difficulty and is difficult to obtain.

In some embodiments, a porosity of the first separator substrate ranges from 40% to 80%. The porosity of the first separator substrate is within the range, which is beneficial to accelerating the transport of lithium ions, thereby further improving the performance of the battery.

In some embodiments, a thickness of the first separator substrate ranges from 3 µm to 30 µm. If the thickness of the first separator substrate is excessively small, the basic performance of the separator may be poor, and if the thickness of the first separator substrate is excessively large, the thickness of the separator may be excessively increased, causing an increase in the volume of the battery.

In some embodiments, the thickness of the first separator substrate ranges from 5 µm to 25 µm. The thickness of the first separator substrate is within the range, which can ensure both good basic performance of the separator and an appropriate volume of the battery.

In some embodiments, the separator further includes a second separator substrate, where the second separator substrate is disposed on a surface of the modification layer away from the first separator substrate. In this case, the separator can effectively prevent the modification layer from directly contacting positive and negative electrodes, thereby reducing the risk of side reactions between an active material on an electrode plate and the graphene oxide.

In some embodiments, a material of the second separator substrate includes a polymer material. The polymer material can improve the isolation effect of the separator, thereby improving the stability inside the battery.

In some embodiments, the polymer material includes at least one of polypropylene, polyethylene, polyamide, polyester, polytetrafluoroethylene, polyvinylidene fluoride, and polyvinyl chloride. These polymer materials have stable properties and widely and readily available sources.

In some embodiments, a weight average molecular weight of the polymer material ranges from 100,000 to 1,000,000. If the weight average molecular weight is excessively small, the performance of the polymer material may be poor, and if the weight average molecular weight is excessively large, the polymer material may have excessively high processing difficulty and is difficult to obtain.

In some embodiments, a porosity of the second separator substrate ranges from 40% to 80%. The porosity of the second separator substrate is within the range, which is beneficial to accelerating the transport of lithium ions, thereby further improving the performance of the battery.

In some embodiments, a thickness of the second separator substrate ranges from 3 µm to 30 µm. If the thickness of the second separator substrate is excessively small, the basic performance of the separator may be poor, and if the thickness of the second separator substrate is excessively large, the thickness of the separator may be excessively increased, causing an increase in the volume of the battery.

In some embodiments, the thickness of the second separator substrate ranges from 5 µm to 25 µm. The thickness of the second separator substrate is within the range, which can ensure both good basic performance of the separator and an appropriate volume of the battery.

In some embodiments, the modification layer further contains a binder. When the modification layer further contains the binder, the bonding between the modification layer and the separator substrates and between the modification layer and the graphene oxide can be promoted.

In some embodiments, the binder includes at least one of sodium carboxymethyl cellulose, styrene-butadiene rubber, and polyvinylidene fluoride. These binders have good binding performance and good adaptability with the separator substrates and the modification layer.

In some embodiments, a mass ratio of the binder to the doped graphene oxide ranges from (0.01 to 0.05):1. If the usage of the binder is excessively small, the problem of poor binding performance may occur, and if the usage of the binder is excessively large, the doping amount of the dopant atoms may be excessively small, resulting in a restricted effect of the dopant atoms.

In some embodiments, the modification layer further contains a dispersant. When the modification layer further contains the dispersant, the uniformity of distribution of materials in the modification layer can be improved, thereby improving the stability of the performance of the separator.

In some embodiments, the dispersant includes at least one of polyethyleneimine and derivatives thereof, hydrolyzed polymaleic anhydride, acrylic acid block polymer, polyester block polymer, and polyethylene glycol. These dispersants have good dispersion performance and good adaptability with the separator substrates and the modification layer.

Optionally, a mass ratio of the dispersant to the doped graphene oxide ranges from (0.01 to 0.08):1. If the usage of the dispersant is excessively small, the problem of poor performance of the dispersant may occur, and if the usage of the dispersant is excessively large, the doping amount of the dopant atoms may be excessively small, resulting in a restricted effect of the dopant atoms.

In some embodiments, the modification layer further contains a thickener. When the modification layer further contains the thickener, the stability of materials in the modification layer can be improved, thereby improving the stability of the performance of the separator.

In some embodiments, the thickener includes at least one of carboxymethylcellulose sodium, methyl cellulose, hydroxyethyl cellulose, hydroxypropyl methyl cellulose, polyacrylate, polyurethane, and polyether. These thickeners have good thickening performance and good adaptability with the separator substrates and the modification layer.

In some embodiments, a mass ratio of the thickener to the doped graphene oxide ranges from (0.005 to 0.05):1. If the usage of the thickener is excessively small, the problem of poor performance of the thickener may occur, and if the usage of the thickener is excessively large, the doping amount of the dopant atoms may be excessively small, resulting in a restricted effect of the dopant atoms.

This application further provides a preparation method of a separator, including the following steps: applying slurry including doped graphene oxide to a surface of a first separator substrate and curing same to form a modification layer that contains the graphene oxide on the corresponding surface of the first separator substrate, where an electronegativity of dopant atoms in the doped graphene oxide is greater than or equal to 2. The preparation method can obtain a separator with good performance, and the preparation method is simple and easy.

In some embodiments, after the applying slurry including doped graphene oxide to a surface of a first separator substrate, the method further includes the following step before the curing: covering a surface of the slurry with a second separator substrate. In this case, a separator with a sandwich structure of "first separator substrate-modification layer-second separator substrate" can be prepared to obtain a separator with better performance.

In some embodiments, the curing includes hot pressing and drying performed sequentially. Curing manners of the hot pressing and the drying are conducive to obtaining a separator with good performance, and operations are simple, which is conducive to improving the preparation efficiency of the separator.

In some embodiments, a temperature of the hot pressing ranges from 120°C to 150°C. If the temperature of the hot pressing is excessively low, it may be difficult to obtain a good effect of hot pressing, and if the temperature of the hot pressing is excessively high, the structure of the separator may be damaged, which adversely affects the performance of the separator.

In some embodiments, a pressure of the hot pressing ranges from 3 MPa to 8 MPa. If the pressure of the hot pressing is excessively low, it may be difficult to obtain a good effect of hot pressing, and if the pressure of the hot pressing is excessively high, the structure of the separator may be damaged, which adversely affects the performance of the separator.

In some embodiments, a time of the hot pressing ranges from 1 min to 5 min. If the time of the hot pressing is excessively short, it may be difficult to obtain a good effect of hot pressing, and if the time of the hot pressing is excessively long, a preparation time may be extended, and the preparation efficiency of the separator may be reduced.

In some embodiments, a temperature of the drying ranges from 90°C to 120°C. If the temperature of the drying is excessively low, it may be difficult to obtain a good effect of hot pressing, and if the temperature of the drying is excessively high, the structure of the separator may be damaged, which adversely affects the performance of the separator.

In some embodiments, a time of the drying ranges from 6 h to 12 h. If the time of the drying is excessively short, it may be difficult to obtain a good effect of drying, and if the time of the drying is excessively long, a preparation time may be extended, and the preparation efficiency of the separator may be reduced.

In some embodiments, the drying is carried out under a vacuum condition. The drying under the vacuum condition is beneficial to improving the effect of drying and obtaining a separator with good performance.

This application further provides a battery, including the foregoing separator or a separator prepared by using the foregoing preparation method of a separator. The introduction of the foregoing separator or the separator prepared by using the foregoing preparation method of a separator can make the battery have good rate performance.

This application further provides a power consuming apparatus, including the foregoing battery. Through the introduction of the foregoing battery, the power consuming apparatus can have good electrical performance.

### BRIEF DESCRIPTION OF THE DRAWINGS

To describe the technical solutions of this application more clearly, the following outlines the drawings to be used in this application. Evidently, the drawings outlined below are merely a part of embodiments of this application. Persons of ordinary skill in the art may derive other drawings from such drawings without making any creative efforts.
FIG. 1 is a schematic diagram of a battery according to an embodiment of this application;
FIG. 2 is an exploded view of a battery according to an embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of a battery pack according to an embodiment of this application shown in FIG. 4;
FIG. 6 is a schematic diagram of a power consuming apparatus using a battery as a power supply according to an embodiment of this application;
FIG. 7 is a schematic diagram of a separator according to an embodiment of this application; and
FIG. 8 is a schematic diagram of a separator according to another embodiment of this application.

### Reference numerals:

1. battery pack; 2. upper box body; 3. lower box body; 4. battery module; 5. battery; 51. housing; 52. electrode assembly; 53. cover plate; 6. power consuming apparatus; 7. separator; 71. first separator substrate; 72. modification layer; and 73. second separator substrate.

To better describe and illustrate embodiments and/or examples of the inventions disclosed herein, reference may be made to one or more drawings. The additional details or examples used to describe the drawings should not be considered as limitations to the scope of any of the disclosed inventions, the currently described embodiments and/or examples, and the currently understood optimal modes of these inventions.

### DETAILED DESCRIPTION

For ease of understanding of this application, this application is described more completely below with reference to the accompanying drawings. The preferred embodiments of this application are given in the accompanying drawings. However, this application may be implemented in various forms, and is not limited to the embodiments described herein. Rather, these embodiments are provided so that the disclosed content of this application will be understood more thoroughly and completely.

Unless otherwise defined, the technical terms and scientific terms used herein have the same meanings as how they are generally understood by persons skilled in the art to which this application pertains. The terms used herein in the specification of this application are merely used for describing specific embodiments, but are not intended to limit this application. The term "and/or" used in this specification encompasses any and all possible combinations of one or more of the associated listed items.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: Ais true or present and B is false or absent; Ais false or absent and B is true or present; or both A and B are true, or both A and B are present.

Unless otherwise specified, the terms used in this application have well-known meanings as commonly understood by persons skilled in the art. Unless otherwise stated, the values of the parameters mentioned in this application can be measured by various measurement methods commonly used in the art, for example, can be tested according to the methods given in the embodiments of this application.

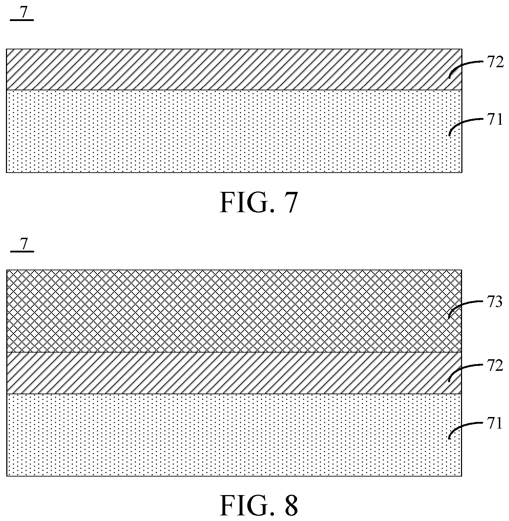

Referring to FIG. 7, an embodiment of this application provides a separator 7. The separator 7 includes a first separator substrate 71 and a modification layer 72 disposed on a surface of the first separator substrate 71. The modification layer 72 contains doped graphene oxide, and an electronegativity of dopant atoms in the doped graphene oxide is greater than or equal to 2. In FIG. 7, the doped graphene oxide is not shown.

In the foregoing embodiment, through the design of the separator, the modification layer that contains the doped graphene oxide is arranged on the surface of the separator substrate, and the electronegativity of the dopant atoms in the doped graphene oxide is greater than or equal to 2. The separator is applied to a secondary battery, and the dopant atoms have a strong electronegativity and can have a particular inducing effect on the transport of lithium ions, so that the lithium ions are close to the separator to a particular extent, which can play a particular regulating effect on the deposition of lithium ions on a surface of a negative electrode, improve the uniformity of the deposition of lithium ions on the surface of the negative electrode, and reduce the degree of lithium plating, thereby providing a new idea for reducing the degree of lithium plating on the negative electrode.

It may be understood that the electronegativity in this application is an electronegativity on the Pauling scale. Optionally, the electronegativity of the dopant atoms in the doped graphene oxide is greater than or equal to 2.5.

Further, when lithium ions form elemental lithium on the separator, graphene oxide can react with the elemental lithium, thereby avoiding continuous generation of elemental lithium, and avoiding growth of lithium dendrites on the separator, so that a short circuit caused by piercing of the entire separator by lithium dendrites can be avoided. Specifically, when lithium ions form elemental lithium on a side of the modification layer away from the first separator substrate, the elemental lithium can react with graphene oxide to be consumed, thereby reducing the risk of growth of lithium dendrites, so that the risk of the growing lithium dendrites piercing the entire separator can be reduced. When lithium ions form elemental lithium on a side of the first separator substrate away from the modification layer, the first separator substrate may be pierced with the growth of lithium dendrites, and then the lithium dendrites come into contact with the modification layer. In this case, graphene oxide can react with the lithium dendrites to consume the lithium dendrites, thereby reducing the risk of continuous growth of the lithium dendrites. In this way, even if the lithium dendrites pierce the first separator substrate, the modification layer is not pierced, which can effectively reduce the risk of the lithium dendrites piercing the entire separator.

As an example of a reaction between elemental lithium and graphene oxide, the reaction between the elemental lithium and the graphene oxide may be expressed as a reaction formula shown in Formula (1):

GO + Li → rGO + Li₂O Formula (1)

In Formula (1), GO represents graphene oxide, and rGO represents reduced graphene oxide. That is, when the elemental lithium comes into contact with the graphene oxide, the elemental lithium can react with the graphene oxide to be consumed, which can effectively reduce the risk of continuous growth of lithium dendrites.

Still further, the dopant atoms in the modification layer have a strong electronegativity and can form hydrogen bonds with hydrogen atoms on the surface of the first separator substrate, which can increase a bonding force between the modification layer and the first separator substrate, and can also increase a bonding force between graphene oxide and graphene oxide, so that the structural stability of the separator can be improved.

In addition, graphene oxide has a hydroxyl group, a carboxyl group, an aldehyde group, or another oxygen-containing functional group and is characterized by good lyophilicity, and the dopant atoms in the modification layer have a strong polarity. This can improve the lyophilic performance of a surface of the separator, improve the affinity between the separator and an electrolytic solution, and facilitate better infiltration of the separator by the electrolytic solution, which is beneficial to reducing the internal resistance of the battery and reducing the formation time of the battery.

In some embodiments, a mass percentage of the dopant atoms in the doped graphene oxide ranges from 1% to 15%. The mass percentage of the dopant atoms in the doped graphene oxide is within the foregoing range, which can reduce the following risks: too few dopant atoms make it difficult to reflect the doping effect of the dopant atoms, and an excessively large mass percentage of dopant atoms in the doped graphene oxide may damage the intrinsic structure of the graphene oxide, reduce the number of oxidized functional groups on a surface of the graphene oxide, reduce the lyophilicity of the graphene oxide, and restrict the improvement of electrolytic solution wettability. In addition, when the mass percentage of the dopant atoms in the doped graphene oxide is within the foregoing range, an amount of the graphene oxide is not reduced, thereby improving the capability of consuming elemental lithium of the modification layer and the effect of consuming elemental lithium by the modification layer, and improving the effect on inhibiting the continuous growth of lithium dendrites. Optionally, the mass percentage of the dopant atoms in the doped graphene oxide is 1%, 2%, 3%, 4%, 5%, 6%, 7%, 8%, 9%, 10%, 11%, 12%, 13%, 14%, 15%, or the like.

Optionally, the dopant atoms include at least one of F atoms, N atoms, S atoms, and B atoms. It may be understood that the atoms have their respective electronegativities, which can be obtained through Pauling's electronegativity table. The electronegativity of the F atoms is 3.98. The electronegativity of the N atoms is 3.04. The electronegativity of the S atoms is 2.58. The electronegativity of the B atoms is 2.04. These dopant atoms have a good inducing effect on the transport of lithium ions, making it convenient to regulate the transport of lithium ions. In addition, sources of these dopant atoms are readily available, making it convenient to obtain the corresponding doped graphene oxide.

In some embodiments, the doped graphene oxide includes at least one of particle doped graphene oxide and sheet doped graphene oxide. The particle doped graphene oxide and the sheet doped graphene oxide can provide large voids for the transport of lithium ions, which is beneficial to improving the ionic conductivity of the separator. It may be understood that the doped graphene oxide can be compounded through micro-oxidation treatment. Optionally, the micro-oxidation treatment includes: cooling concentrated sulfuric acid to -10°C, stirring and mixing sodium nitrate and the doped graphene oxide uniformly, then performing standing, adjusting pH to 4 to 5, performing drying, and then performing heat treatment to improve surface oxidizing ability. Optionally, the micro-oxidation treatment includes: cooling 200 mL of concentrated sulfuric acid (98wt%, analytically pure) to -10°C through a low-temperature coolant circulation pump, stirring and mixing 10 g of sodium nitrate (analytically pure) and 20 g of doped graphene oxide uniformly, performing standing for 12 h, adjusting pH to 4 to 5, performing drying at 90°C, and then performing heat treatment at 200°C for 10 min, which can improve surface oxidizing ability.

Optionally, Dv50 of the particle doped graphene oxide ranges from 0.5 µm to 5 µm. For example, Dv50 of the particle doped graphene oxide is 0.5 µm, 0.8 µm, 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, 4.2 µm, 4.5 µm, 4.8 µm, 5 µm, or the like. When Dv50 of the particle doped graphene oxide is within the range of 0.5 µm to 5 µm, the particle doped graphene oxide is not easy to permeate to the other side of the first separator substrate, which is conducive to maintaining the structural stability of the separator.

It may be understood that in this application, Dv50 refers to a corresponding particle size when a cumulative particle size distribution percentage of particles reaches 50% in a cumulative volume distribution curve, and has a physical meaning that particles with a particle size smaller (or larger) than Dv50 account for 50%. As an example, Dv50 may be measured conveniently by using a laser particle size analyzer, for example, a Mastersizer 2000E laser particle size analyzer of Britain-based Malvern Instruments Ltd., with reference to the standard GB/T 19077-2016 Particle Size Analysis-Laser Diffraction Methods.

Optionally, the sheet doped graphene oxide has a thickness ranging from 0.5 nm to 3 nm and a sheet diameter ranging from 0.2 µm to 10 µm. For example, the thickness of the sheet doped graphene oxide is 0.5 nm, 0.8 nm, 1 nm, 1.2 nm, 1.5 nm, 1.8 nm, 2 nm, 2.2 nm, 2.5 nm, 2.8 nm, 3 nm, or the like. The sheet diameter of the sheet doped graphene oxide is 0.2 µm, 0.5 µm, 0.8 µm, 1 µm, 2 µm, 3 µm, 4 µm, 5 µm, 6 µm, 7 µm, 8 µm, 9 µm, 10 µm, or the like. When the thickness and the sheet diameter of the sheet doped graphene oxide are within the foregoing ranges, the sheet doped graphene oxide is not easy to permeate to the other side of the first separator substrate, which is conducive to maintaining the structural stability of the separator.

It may be understood that the doped graphene oxide includes graphene oxide and dopant atoms. The dopant atoms are doped in the graphene oxide. The doped graphene oxide may be directly purchased commercially available products, or can be obtained by using the following preparation method.

When the dopant atoms are F atoms, a preparation method of F-doped graphene oxide (FGO) includes: ultrasonically dispersing the graphene oxide (GO) in deionized water to form a uniform dispersion solution; and then adding HNO₃ and HF to the dispersion solution, performing heating, and drying the solution after reaction to obtain FGO. Optionally, FGO is a sheet with a thickness of 2 nm and a sheet diameter ranging from 0.2 µm to 10 µm.

Optionally, a temperature of the heating ranges from 150°C to 170°C, and a time of the heating ranges from 8 h to 15 h. Further optionally, the temperature of the heating is 150°C, 155°C, 160°C, 165°C, 170°C, or the like. The time of the heating is 8 h, 9 h, 10 h, 11 h, 12 h, 13 h, 14 h, 15 h, or the like.

Still further optionally, the preparation method of F-doped graphene oxide (FGO) includes: ultrasonically dispersing 50 mg of the graphene oxide (GO) in 40 mL of deionized water to form a uniform dispersion solution; and then adding 0.5 mL of HNO₃ and 9.5 mL of HF to the dispersion solution, then transferring the dispersion solution to a reaction kettle, performing heating at 160°C for 12 h, and drying the solution after reaction to obtain FGO.

When the dopant atoms are N atoms, a preparation method of N-doped graphene oxide (NGO) includes: grinding and mixing GO and melamine as precursors; and heating a resulting mixture in a shielding gas atmosphere, and then performing cooling, washing with water, and drying to obtain NGO. Optionally, NGO is a sheet with a thickness ranging from 0.8 nm to 1.2 nm and a sheet diameter ranging from 1 µm to 5 µm.

Optionally, a temperature of the heating ranges from 700°C to 900°C. Further optionally, the temperature of the heating is 700°C, 750°C, 800°C, 850°C, 900°C, or the like. Still further optionally, during the heating, the mixture is heated from an initial temperature to 700°C to 900°C at a heating rate of 5°C/min.

Still further optionally, the preparation method of N-doped graphene oxide (NGO) includes: fully grinding and mixing 200 mg of GO and 1 g of melamine as precursors; and heating a resulting mixture in an argon atmosphere to 800°C at a heating rate of 5°C/min, and then performing cooling, washing with water, and drying to obtain NGO.

When the dopant atoms are S atoms, a preparation method of S-doped graphene oxide (SGO) includes: mixing GO and N,N-dimethylformamide to obtain a mixed solution, adding thionyl chloride to the mixed solution, performing stirring reaction, and then performing solid-liquid separation, washing, and drying to obtain SGO. Optionally, SGO is a sheet with a thickness ranging from 1 nm to 2 nm and a sheet diameter ranging from 0.2 µm to 10 µm.

Optionally, a temperature of the stirring reaction ranges from 50°C to 80°C, and a time of the stirring reaction ranges from 12 h to 36 h. Further optionally, the temperature of the stirring reaction is 50°C, 55°C, 60°C, 65°C, 70°C, 75°C, 80°C, or the like.

Still further optionally, the preparation method of S-doped graphene oxide (SGO) includes: adding 0.1 g to 1 g of GO to 50 mL to 100 mL of N,N-dimethylformamide, performing ultrasonic dispersion for 20 min to 40 min to form a uniformly dispersed mixed solution, weighing and adding 10 mL to 30 mL of thionyl chloride to the mixed solution, performing reaction at 50°C to 80°C for 12 h to 36 h under mechanical stirring, and then performing centrifugation, washing, and drying to obtain SGO.

When the dopant atoms are B atoms, a preparation method of B-doped graphene oxide (BGO) includes: mixing GO and H₃BO₃; and heating a resulting mixture, and then performing cooling, washing with water, and drying to obtain BGO.

Optionally, during preparation of BGO, a temperature of the heating ranges from 250°C to 300°C, a pressure of the reaction ranges from 20 MPa to 22 MPa, pH ranges from 4.0 to 4.5, and a time of the reaction ranges from 2 h to 5 h.

Further optionally, the preparation method of B-doped graphene oxide (BGO) includes: adding 0.25 g of GO and 5 mL of 2M H₃BO₃ to a reaction kettle, controlling a temperature of the reaction to 250°C to 300°C, a pressure of the reaction to 20 MPa to 22 MPa, and pH to 4.0 to 4.5, performing reaction for 2 h, and performing washing and drying to obtain BGO.

In some embodiments, a porosity of the modification layer ranges from 5% to 30%. In this case, a larger porosity can be provided for the separator, which is conducive to accelerating the transport of lithium ions, thereby further improving the performance of the battery. Optionally, the porosity of the modification layer is 5%, 8%, 10%, 15%, 20%, 25%, 30%, or the like.

In some embodiments, a thickness of the modification layer ranges from 2 µm to 5 µm. Optionally, the thickness of the modification layer is 2 µm, 3 µm, 4 µm, 5 µm, or the like. If the thickness of the modification layer is excessively small, the effect of improving the performance of the separator is poor, and if the thickness of the modification layer is excessively large, the thickness of the separator may be excessively increased, causing an increase in the volume of the battery.

In some embodiments, a material of the first separator substrate includes a polymer material. The polymer material can improve the isolation effect of the separator, thereby improving the stability inside the battery. Optionally, the polymer material includes at least one of polypropylene, polyethylene, polyamide, polyester, polytetrafluoroethylene, polyvinylidene fluoride, and polyvinyl chloride. These polymer materials have stable properties and widely and readily available sources. Further optionally, a weight average molecular weight of the polymer material ranges from 100,000 to 1,000,000. If the weight average molecular weight is excessively small, the performance of the polymer material may be poor, and if the weight average molecular weight is excessively large, the polymer material may have excessively high processing difficulty and is difficult to obtain.

In some embodiments, a porosity of the first separator substrate ranges from 40% to 80%. The porosity of the first separator substrate is within the range, which is beneficial to accelerating the transport of lithium ions, thereby further improving the performance of the battery. For example, the porosity of the first separator substrate is 40%, 45%, 50%, 55%, 60%, 65%, 70%, 75%, 80%, or the like.

It may be understood that a method for testing the porosity in this application is: performing testing with reference to the standard GB/T 36363-2018.

In some embodiments, a thickness of the first separator substrate ranges from 3 µm to 30 µm. If the thickness of the first separator substrate is excessively small, the basic performance of the separator may be poor, and if the thickness of the first separator substrate is excessively large, the thickness of the separator may be excessively increased, causing an increase in the volume of the battery. For example, the thickness of the first separator substrate is 3 µm, 5 µm, 8 µm, 10 µm, 15 µm, 18 µm, 20 µm, 23 µm, 25 µm, 28 µm, 30 µm, or the like. Optionally, the thickness of the first separator substrate ranges from 5 µm to 25 µm. The thickness of the first separator substrate is within the range, which can ensure both good basic performance of the separator and an appropriate volume of the battery.

Referring to FIG. 8, in some embodiments, the separator 7 further includes a second separator substrate 73, where the second separator substrate 73 is disposed on a surface of the modification layer 72 away from the first separator substrate 71. In this case, the separator 7 can have a sandwich structure of "first separator substrate 71-modification layer 72-second separator substrate 73". In this case, the separator can effectively prevent the modification layer from directly contacting positive and negative electrodes, thereby reducing the risk of side reactions between an active material on an electrode plate and the graphene oxide. These side reactions consume lithium and reduce the capacity and cycle life of the battery. That is, the sandwich structure can reduce lithium consumption due to side reactions, and is conducive to maintaining the capacity and cycle life of the battery. In addition, the sandwich structure has a more stable structure, which can make the structure and performance of the separator and the battery more stable.

In some embodiments, a material of the second separator substrate includes a polymer material. The polymer material can improve the isolation effect of the separator, thereby improving the stability inside the battery. Optionally, the polymer material includes at least one of polypropylene, polyethylene, polyamide, polyester, polytetrafluoroethylene, polyvinylidene fluoride, and polyvinyl chloride. These polymer materials have stable properties and widely and readily available sources. Further optionally, a weight average molecular weight of the polymer material ranges from 100,000 to 1,000,000. If the weight average molecular weight is excessively small, the performance of the polymer material may be poor, and if the weight average molecular weight is excessively large, the polymer material may have excessively high processing difficulty and is difficult to obtain.

Optionally, a porosity of the second separator substrate ranges from 40% to 80%. The porosity of the second separator substrate is within the range, which is beneficial to accelerating the transport of lithium ions, thereby further improving the performance of the battery. For example, the porosity of the second separator substrate is 40%, 45%, 50%, 55%, 60%, 65%, 70%, 75%, 80%, or the like.

Optionally, a thickness of the second separator substrate ranges from 3 µm to 30 µm. If the thickness of the second separator substrate is excessively small, the basic performance of the separator may be poor, and if the thickness of the second separator substrate is excessively large, the thickness of the separator may be excessively increased, causing an increase in the volume of the battery. For example, the thickness of the second separator substrate is 3 µm, 5 µm, 8 µm, 10 µm, 15 µm, 18 µm, 20 µm, 23 µm, 25 µm, 28 µm, 30 µm, or the like. Optionally, the thickness of the second separator substrate ranges from 5 µm to 25 µm. The thickness of the second separator substrate is within the range, which can ensure both good basic performance of the separator and an appropriate volume of the battery.

It may be understood that the first separator substrate and the second separator substrate may be the same or different.

In some embodiments, the modification layer further contains a binder. Optionally, the binder includes at least one of sodium carboxymethyl cellulose, styrene-butadiene rubber, and polyvinylidene fluoride. These binders have good binding performance and good adaptability with the separator substrates and the modification layer. Further optionally, a mass ratio of the binder to the doped graphene oxide ranges from (0.01 to 0.05):1. If the usage of the binder is excessively small, the problem of poor binding performance may occur, and if the usage of the binder is excessively large, the doping amount of the dopant atoms may be excessively small, resulting in a restricted effect of the dopant atoms. When the modification layer further contains the binder, due to the presence of dopant atoms in the modification layer, the bonding between the modification layer and the separator substrates and between the modification layer and the graphene oxide can be promoted. Therefore, on the basis of maintaining a bonding force, the presence of the dopant atoms can reduce the use of the binder. Optionally, the mass ratio of the binder to the doped graphene oxide is 0.01:1, 0.02:1, 0.03:1, 0.04:1, 0.05:1, or the like.

In some embodiments, the modification layer further contains a dispersant. When the modification layer further contains the dispersant, the uniformity of dispersion of materials in the modification layer can be improved, thereby improving the stability of the performance of the separator.

Optionally, the dispersant includes at least one of polyethyleneimine and derivatives thereof, hydrolyzed polymaleic anhydride, acrylic acid block polymer, polyester block polymer, and polyethylene glycol. These dispersants have good dispersion performance and good adaptability with the separator substrates and the modification layer.

Further optionally, a mass ratio of the dispersant to the doped graphene oxide ranges from (0.01 to 0.08):1. If the usage of the dispersant is excessively small, the problem of poor performance of the dispersant may occur, and if the usage of the dispersant is excessively large, the doping amount of the dopant atoms may be excessively small, resulting in a restricted effect of the dopant atoms. Optionally, the mass ratio of the dispersant to the doped graphene oxide is 0.01:1, 0.02:1, 0.03:1, 0.04:1, 0.05:1, 0.06:1, 0.07:1, 0.08:1, or the like.

In some embodiments, the modification layer further contains a thickener. When the modification layer further contains the thickener, the stability of materials in the modification layer can be improved, thereby improving the stability of the performance of the separator.

Optionally, the thickener includes at least one of carboxymethylcellulose sodium, methyl cellulose, hydroxyethyl cellulose, hydroxypropyl methyl cellulose, polyacrylate, polyurethane, and polyether. These thickeners have good thickening performance and good adaptability with the separator substrates and the modification layer.

Further optionally, a mass ratio of the thickener to the doped graphene oxide ranges from (0.005 to 0.05):1. If the usage of the thickener is excessively small, the problem of poor performance of the thickener may occur, and if the usage of the thickener is excessively large, the doping amount of the dopant atoms may be excessively small, resulting in a restricted effect of the dopant atoms. Optionally, the mass ratio of the thickener to the doped graphene oxide is 0.005:1, 0.006:1, 0.007:1, 0.008:1, 0.009:1, 0.01:1, 0.015:1, 0.02:1, 0.025:1, 0.03:1, 0.035:1, 0.04:1, 0.045:1, 0.05:1, or the like.

Another embodiment of this application provides a preparation method of a separator, including the following steps: applying slurry including doped graphene oxide to a surface of a first separator substrate and curing same to form a modification layer that contains the graphene oxide on the corresponding surface of the first separator substrate, where an electronegativity of dopant atoms in the doped graphene oxide is greater than or equal to 2.0. The preparation method can obtain a separator with good performance, and the preparation method is simple and easy.

Optionally, after the applying slurry including doped graphene oxide to a surface of a first separator substrate, the method further includes the following step before the curing: covering a surface of the slurry with a second separator substrate. In this case, a separator with a sandwich structure of "first separator substrate-modification layer-second separator substrate" can be prepared to obtain a separator with better performance.

In some embodiments, the curing includes hot pressing and drying performed sequentially. Curing manners of the hot pressing and the drying are conducive to obtaining a separator with good performance, and operations are simple, which is conducive to improving the preparation efficiency of the separator.

Optionally, a temperature of the hot pressing ranges from 120°C to 150°C. If the temperature of the hot pressing is excessively low, it may be difficult to obtain a good effect of hot pressing, and if the temperature of the hot pressing is excessively high, the structure of the separator may be damaged, which adversely affects the performance of the separator. For example, the temperature of the hot pressing is 120°C, 125°C, 130°C, 135°C, 140°C, 145°C, 150°C, or the like.

Optionally, a pressure of the hot pressing ranges from 3 MPa to 8 MPa. If the pressure of the hot pressing is excessively low, it may be difficult to obtain a good effect of hot pressing, and if the pressure of the hot pressing is excessively high, the structure of the separator may be damaged, which adversely affects the performance of the separator. For example, the pressure of the hot pressing is 3 MPa, 4 MPa, 5 MPa, 6 MPa, 7 MPa, 8 MPa, or the like.

Optionally, a time of the hot pressing ranges from 1 min to 5 min. If the time of the hot pressing is excessively short, it may be difficult to obtain a good effect of hot pressing, and if the time of the hot pressing is excessively long, a preparation time may be extended, and the preparation efficiency of the separator may be reduced. For example, the time of the hot pressing is 1 min, 2 min, 3 min, 4 min, 5 min, or the like.

In some embodiments, a temperature of the drying ranges from 90°C to 120°C. If the temperature of the drying is excessively low, it may be difficult to obtain a good effect of hot pressing, and if the temperature of the hot pressing is excessively high, the structure of the separator may be damaged, which adversely affects the performance of the separator. For example, the temperature of the drying is 90°C, 95°C, 100°C, 105°C, 110°C, 115°C, 120°C, or the like.

Optionally, a time of the drying ranges from 6 h to 12 h. If the time of the drying is excessively short, it may be difficult to obtain a good effect of drying, and if the time of the drying is excessively long, a preparation time may be extended, and the preparation efficiency of the separator may be reduced. For example, a time of the drying is 6 h, 7 h, 8 h, 9 h, 10 h, 11 h, 12 h, or the like.

Further optionally, the drying is carried out under a vacuum condition. The drying under the vacuum condition is beneficial to improving the effect of drying and obtaining a separator with good performance.

It may be understood that the slurry including the doped graphene oxide further includes at least one of a binder, a dispersant, and a thickener. The selected materials, usage, and the like of the binder, the dispersant, and the thickener may be selected correspondingly in the content of the foregoing separator, and details are not described herein again.

It may further be understood that the slurry including the doped graphene oxide further includes a solvent. Optionally, the solvent includes one or more of water, N-methylpyrrolidone (NMP), N,N-dimethylformamide (DMF), dimethylsulfoxide (DMSO), and dimethylacetamide (DMAC). Optionally, in the slurry including the doped graphene oxide, a mass ratio of the doped graphene oxide to the solvent ranges from (0.5 to 5):100. For example, the mass ratio of the doped graphene oxide to the solvent is 0.5:100, 1:100, 2:100, 3:100, 4:100, 5:100, or the like.

In some embodiments, a preparation method of the slurry including the doped graphene oxide includes: stirring and mixing the doped graphene oxide and a solvent. Optionally, a speed of the stirring and mixing ranges from 700 rpm to 1000 rpm. It may be understood that during the stirring and mixing, at least one of a binder, a dispersant, and a thickener may be added as required.

Another embodiment of this application provides a battery, including the foregoing separator or a separator prepared by using the foregoing preparation method of a separator. The introduction of the foregoing separator or the separator prepared by using the foregoing preparation method of a separator can make the battery have good rate performance.

This application further provides a battery module. The battery module includes the foregoing battery.

This application further provides a battery pack. The battery pack includes the foregoing battery or the foregoing battery module.

This application further provides a power consuming apparatus, including at least one of the foregoing battery, the foregoing battery module, and the foregoing battery pack. Through the introduction of at least one of the foregoing battery, the foregoing battery module, and the foregoing battery pack, the power consuming apparatus can have good electrical performance.

The battery, battery module, battery pack, and power consuming apparatus of this application are described below by appropriately referring to the accompanying drawings. It may be understood that the battery of this application may be a secondary battery.

Generally, the secondary battery includes a positive electrode plate, a negative electrode plate, an electrolyte, and a separator. During the charge/discharge of the battery, active ions are intercalated and de-intercalated back and forth between the positive electrode plate and the negative electrode plate. The electrolyte plays a role in conducting ions between the positive electrode plate and the negative electrode plate. The separator is disposed between the positive electrode plate and the negative electrode plate, and is mainly used for preventing a short circuit of positive and negative electrodes and allowing ions to pass through.

### Positive electrode plate

The positive electrode plate includes a positive electrode current collector and a positive electrode film layer arranged on at least one surface of the positive electrode current collector, the positive electrode film layer including a positive electrode active material.

As an example, the positive electrode current collector has two opposite surfaces in a thickness direction of the positive electrode current collector, and the layer of the positive electrode active material is arranged on either or both of the two opposite surfaces of the positive electrode current collector.

In some embodiments, the positive electrode current collector may use a metal foil or a composite current collector. For example, an aluminum foil may be used as the metal foil. The composite current collector may include a polymer material base layer and a metal layer formed on at least one surface of the polymer material base layer. The composite current collector may be formed by forming the metal material on the polymer material substrate. Optionally, the metal material may include, but is not limited to, one or more of aluminum, aluminum alloy, nickel, nickel alloy, titanium, titanium alloy, silver, and silver alloy. Optionally, the polymer material substrate may include, but is not limited to, one or more of polypropylene (PP), polyethylene terephthalate (PET), polybutylene terephthalate (PBT), polystyrene (PS), and polyethylene (PE).

As an example, the positive electrode active material may include a positive electrode active material for batteries well-known in the art. As an example, the positive electrode active material may include at least one of the following materials: lithium-containing phosphate of an olivine structure, lithium transition metal oxide, and respective modified compounds thereof. However, this application is not limited to such materials, and may alternatively use another conventional material that may be used as a positive electrode active material for batteries. One of these positive electrode active materials may be used alone, or two or more of these positive electrode active materials may be used in combination. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Optionally, the lithium cobalt oxide includes LiCoO₂. The lithium nickel oxide includes LiNiO₂. The lithium manganese oxide includes at least one of LiMnO₂ and LiMn₂O₄. The lithium nickel cobalt manganese oxide includes at least one of LiNi_{1/3}Co_{1/3}Mn_{1/3}O₂ (NCM₃₃₃), LiNi_{0.5}Co_{0.2}Mn_{0.3}O₂ (NCM₅₂₃), LiNi_{0.5}Co_{0.25}Mn_{0.25}O₂ (NCM₂₁₁), LiNi_{0.6}Co_{0.2}Mn_{0.2}O₂ (NCM₆₂₂), and LiNi_{0.8}Co_{0.1}Mn_{0.1}O₂ (NCM₈₁₁). The lithium nickel cobalt aluminum oxide includes LiNi_{0.85}Co_{0.15}Al_{0.05}O₂. Examples of the lithium-containing phosphate of an olivine structure may include, but are not limited to, at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Optionally, the lithium iron phosphate includes LiFePO₄ (LFP). The lithium manganese phosphate includes LiMnPO₄. A weight percentage of the positive electrode active material in the positive electrode film layer ranges from 80 wt% to 100 wt%, based on a total weight of the positive electrode film layer.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. A weight percentage of the binder in the positive electrode film layer ranges from 0 wt% to 20 wt%, based on the total weight of the positive electrode film layer.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers. A weight percentage of the conductive agent in the positive electrode film layer ranges from 0 wt% to 20 wt%, based on the total weight of the positive electrode film layer.

In some embodiments, the positive electrode plate may be prepared in the following manner: the foregoing components such as the positive electrode active material, the conductive agent, the binder, and any other components for preparing the positive electrode plate are dispersed in a solvent to form positive electrode slurry. Optionally, the solvent includes N-methylpyrrolidone. The positive electrode slurry has solid content ranging from 40 wt% to 80 wt% and a viscosity adjusted to 5000 mPa·s to 25000 mPa·s at room temperature. The positive electrode slurry is coated on a surface of the positive electrode current collector and dried, and cold pressing is performed by a cold rolling machine to form the positive electrode plate. A coating unit area density of a positive electrode powder ranges from 150 mg/m² to 350 mg/m². A compaction density of the positive electrode plate ranges from 3.0 g/cm³ to 3.6 g/cm³, and optionally ranges from 3.3 g/cm³ to 3.5 g/cm³. A formula for calculating the compaction density is: the compaction density = a coating area density/(a thickness of an electrode plate after pressing - a thickness of a current collector).

It may be understood that the positive electrode plate in the embodiments of this application may be made by using the foregoing positive electrode plate as a positive electrode plate body and forming a solid electrolyte interface film on a surface of the positive electrode plate body.

### Negative electrode plate

The negative electrode plate includes a negative electrode current collector and a negative electrode film layer arranged on at least one surface of the negative electrode current collector, the negative electrode film layer including a negative electrode active material.

As an example, the negative electrode current collector has two opposite surfaces in a thickness direction of the negative electrode current collector, and the negative electrode film layer is arranged on either or both of the two opposite surfaces of the negative electrode current collector.

In some embodiments, the negative electrode current collector may use a metal foil or a composite current collector. For example, a copper foil may be used as the metal foil. The composite current collector may include a polymer material substrate and a metal layer formed on at least one surface of the polymer material base layer. The composite current collector may be formed by forming a metal material on the polymer material substrate. Optionally, the metal material includes at least one of copper, copper alloy, nickel, nickel alloy, titanium, titanium alloy, silver, and silver alloy. The polymer material includes at least one of polypropylene (PP), polyethylene terephthalate (PET), polybutylene terephthalate (PBT), polystyrene (PS), and polyethylene (PE).

In some embodiments, the negative electrode active material may be a negative electrode active material used for batteries well-known in the art. As an example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, silicon oxide, a silicon-carbon composite, a silicon-nitrogen composite, and silicon alloy. The tin-based material may be at least one selected from elemental tin, a tin oxide compound, and tin alloy. However, this application is not limited to such materials, and may alternatively use another conventional material that can be used as a negative electrode active material for batteries. One of these negative electrode active materials may be used alone, or two or more of these negative electrode active materials may be used in combination. A weight percentage of the negative electrode active material in the negative electrode film layer ranges from 70 wt% to 100 wt%, based on a total weight of the negative electrode film layer.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), poly(methyl methacrylate) (PMAA), and carboxymethyl chitosan (CMCS). A weight percentage of the binder in the negative electrode film layer ranges from 0 wt% to 30 wt%, based on the total weight of the negative electrode film layer.

In some embodiments, the negative electrode film layer further optionally includes a conductive agent. The conductive agent may be at least one selected from superconducting carbon, acetylene black, carbon black, Ketjen black, carbon dots, carbon nanotubes, graphene, and carbon nanofibers. A weight percentage of the conductive agent in the negative electrode film layer ranges from 0 wt% to 20 wt%, based on the total weight of the negative electrode film layer.

In some embodiments, the negative electrode film layer further optionally includes other additives, for example, a thickener. A weight percentage of the other additives in the negative electrode film layer ranges from 0 wt% to 15 wt%, based on the total weight of the negative electrode film layer. Optionally, the thickener includes sodium carboxymethyl cellulose (CMC-Na).

In some embodiments, the negative electrode plate may be prepared in the following manner: the foregoing components such as the negative electrode active material, the conductive agent, the binder, and any other components for preparing the negative electrode plate are dispersed in a solvent to form negative electrode slurry. Optionally, the solvent includes deionized water. The negative electrode slurry has solid content ranging from 30 wt% to 70 wt% and a viscosity adjusted to 2000 mPa·s to 10000 mPa·s at room temperature. The obtained negative electrode slurry is coated on the negative electrode current collector, and after a drying process, the negative electrode plate is obtained by cold pressing using, for example, a roll pair. A coating unit area density of a negative electrode powder ranges from 75 mg/m² to 220 mg/m². A compaction density of the negative electrode plate ranges from 1.2 g/m³ to 2.0 g/m³.

It may be understood that the negative electrode plate in the embodiments of this application may be made by using the foregoing negative electrode plate as a negative electrode plate body and forming a solid electrolyte interface film on a surface of the negative electrode plate body.

### Electrolyte

The electrolyte plays a role in conducting ions between the positive electrode plate and the negative electrode plate. A type of the electrolyte is not specifically limited in this application, and may be selected as required. For example, the electrolyte may be liquid, gelled, or all solid.

In some embodiments, the electrolyte uses an electrolytic solution. The electrolytic solution includes an electrolyte salt and a solvent.

In some embodiments, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium triflate (LiTFS), lithium difluoro(oxalato)borate (LiDFOB), lithium bis(oxalato)borate (LiBOB), lithium difluorophosphate (LiPO₂F₂), lithium difluorobis(oxalate) phosphate (LiDFOP), and lithium tetrafluoro(oxalato)phosphate (LiTFOP). A concentration of the electrolyte salt usually ranges from 0.5 mol/L to 5 mol/L.

In some embodiments, the solvent may be one or more selected from fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution further optionally includes an additive. For example, the additive may include a negative electrode film forming additive, a positive electrode film forming additive, and may further include an additive that can improve particular battery performance, for example, an additive that improves battery overcharging performance, an additive that improves high or low temperature performance of the battery, or the like.

### Separator

In some embodiments, the secondary battery further includes a separator. A type of the separator is not specifically limited in this application, and any well-known porous structure separator with good chemical stability and mechanical stability may be selected. The separator may be the foregoing separator or a separator prepared by using the foregoing preparation method of a separator.

In some embodiments, a material of the separator may be at least one selected from glass fiber, non-woven fabric, polyethylene, polypropylene, or polyvinylidene fluoride. The separator may be a single-layer film or may be a multi-layer composite film without special limitations. When the separator is the multi-layer composite film, the materials of the layers may be the same or different without special limitations.

In some embodiments, an electrode assembly may be manufactured by the positive electrode plate, the negative electrode plate, and the separator by a winding process or a stacking process.

In some embodiments, the secondary battery may include an outer packaging. The outer packaging may be used for packaging the foregoing electrode assembly and electrolyte.

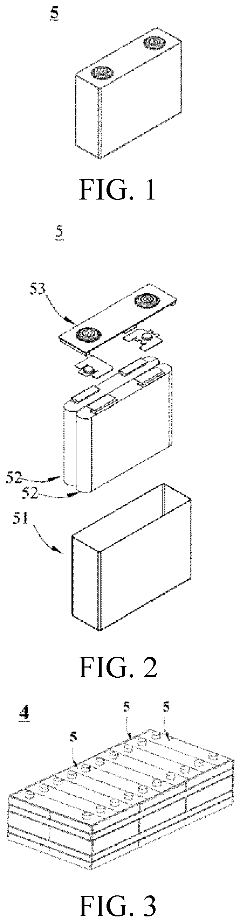

In some embodiments, the outer packaging of the secondary battery may be a hard case, for example, a hard plastic case, an aluminum case, or a steel case. The outer packaging of the secondary battery may alternatively be a soft pack, for example, a pouch type soft pack. A material of the soft pack may be plastics, and examples of the plastics may include polypropylene, polybutylene terephthalate, polybutylene succinate, and the like. A shape of the secondary battery is not specifically limited in this application, and may be cylindrical, cuboidal, or in any other shape. For example, FIG. 1 shows a secondary battery 5 of a cuboidal structure as an example.

In some embodiments, referring to FIG. 2, the outer packaging may include a housing 51 and a cover plate 53. The housing 51 may include a bottom plate and a side plate connected to the bottom plate. The bottom plate and the side plate enclose an accommodating cavity. The housing 51 is provided with an opening in communication with the accommodating cavity, and the cover plate 53 can cover the opening to close the accommodating cavity. An electrode assembly 52 may be formed by the positive electrode plate, the negative electrode plate, and the separator by a winding process or a stacking process. The electrode assembly 52 is packaged in the accommodating cavity. The electrolytic solution infiltrates into the electrode assembly 52. One or more electrode assemblies 52 may be included in the secondary battery 5, and persons skilled in the art may make choices according to specific actual requirements.

In some embodiments, the secondary battery may be assembled into a battery module. The battery module may include one or more secondary batteries, and a specific quantity may be selected by persons skilled in the art based on application and capacity of the battery module.

FIG. 3 shows a battery module 4 as an example. Referring to FIG. 3, in the battery module 4, a plurality of secondary batteries 5 may be arranged sequentially in a length direction of the battery module 4. Certainly, the secondary batteries 5 may be arranged in any other manner. Further, the plurality of secondary batteries 5 may be fixed by a fastener.

Optionally, the battery module 4 may further include a casing with an accommodating space, and the plurality of secondary batteries 5 are accommodated in the accommodating space.

In some embodiments, the foregoing battery module may be assembled into a battery pack. The battery pack may include one or more battery modules, and a specific quantity may be selected by persons skilled in the art based on application and capacity of the battery pack.

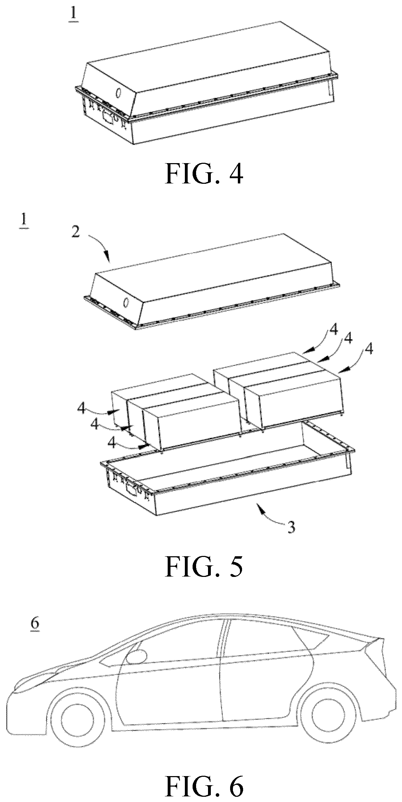

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box body 2 and a lower box body 3. The upper box body 2 can cover the lower box body 3 and form an enclosed space for accommodating the battery modules 4. The plurality of battery modules 4 may be arranged in the battery box in any manner.

In addition, this application further provides a power consuming apparatus. The power consuming apparatus includes at least one of the secondary battery, the battery module, or the battery pack provided by this application. The secondary battery, the battery module, or the battery pack may be used as a power supply of the power consuming apparatus, or may be used as an energy storage unit of the power consuming apparatus. The power consuming apparatus may be a mobile device (for example, a mobile phone, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like, but is not limited thereto.

The secondary battery, the battery module, or the battery pack may be selected for the power consuming apparatus according to a use requirement of the power consuming apparatus.

FIG. 6 shows a power consuming apparatus as an example. The power consuming apparatus is a pure electric vehicle, a hybrid electric vehicle, a plug-in hybrid electric vehicle, or the like. To meet the requirements of the power consuming apparatus for high power and high energy density of a secondary battery, a battery pack or a battery module may be used.

For another example, the apparatus may be a mobile phone, a tablet computer, a notebook computer, or the like. The apparatus usually needs to be light and thin, and a secondary battery may be used as a power supply.

### Examples

To make the technical problems solved by this application, the technical solutions, and the beneficial effects clearer, this application is further described below in detail with reference to the examples and the accompanying drawings. Apparently, the described examples are some rather than all of the examples of this application. The following description of at least one exemplary example is merely illustrative in nature and is in no way intended to pose any limitation on this application and its application. All other examples obtained by persons of ordinary skill in the art based on the examples of this application without creative efforts shall fall within the protection scope of this application.

In examples where no specific technologies or conditions are indicated, they shall be carried out according to the technologies or conditions described in the literature in the field or according to the product specifications. The used reagents or instruments without manufacturer indicated are all conventional products that may be purchased in the market.

### Example 1

In this example, the dopant atoms are F atoms, and a mass percentage of the dopant atoms in the doped graphene oxide is 3%. The doped graphene oxide was purchased from a commercial company. The doped graphene oxide has a sheet shape with a thickness of 2 nm and a sheet diameter ranging from 0.2 µm to 10 µm.

A preparation method of a separator in this example includes the following steps:
(1) 2 g of doped graphene oxide was uniformly dispersed in 100 g of water, and ultrasonic dispersion was performed for 2 h to obtain a uniform dispersion solution.
(2) 0.1 g of sodium carboxymethyl cellulose (sodium carboxymethyl cellulose was used as a binder and a thickener, where the binder and the thickener each were 0.05 g of sodium carboxymethyl cellulose) and 0.1 g of hydrolyzed polymaleic anhydride were added to the dispersion solution obtained in (1), and magnetic stirring was performed at 800 rpm for 2 h to obtain slurry including the doped graphene oxide.
(3) The slurry obtained in (2) was uniformly scraped onto a polypropylene (PP) film with a thickness of 7 µm, another PP film with a thickness of 7 µm was taken to cover a surface of the slurry, and hot pressing and vacuum drying were performed to obtain a separator in this example. A temperature of the hot pressing was 120°C, a pressure of the hot pressing was 5 MPa, and a time of the hot pressing was 5 min. A temperature of the vacuum drying was 100°C, and a time of the vacuum drying was 12 hours. A weight average molecular weight of the polypropylene ranged from 100,000 to 1,000,000.

In this example, two separator substrates are provided, and the separator has a sandwich structure of "separator substrate-modification layer-separator substrate". A thickness of the separator was 17 µm, and a thickness of the modification layer was 3 µm.

### Example 2

Compared with Example 1, this example is different in that a preparation method of doped graphene oxide includes: graphene oxide was ultrasonically dispersed in deionized water to form a uniform dispersion solution. Then HNO₃ and HF were added to the dispersion solution, then the dispersion solution was transferred to a reaction kettle, heating was performed at 160°C for 12 h, and the solution after reaction was dried to obtain doped graphene oxide. The graphene oxide was XF096 graphene oxide from Jiangsu Xianfeng Nano Materials Technology Co., Ltd.

### Example 3 to Example 13

Compared with Example 1, Example 3 to Example 13 are different in that the dopant atoms and/or the mass percentages of the dopant atoms in the doped graphene oxide are different. The doped graphene oxide is prepared from graphene oxide by using the foregoing preparation methods of FGO, NGO, SGO, and BGO. The graphene oxide was XF096 graphene oxide from Jiangsu Xianfeng Nano Materials Technology Co., Ltd. Details are shown in Table 1.

### Example 14

Compared with Example 1, Example 14 is different in that:
A preparation method of a separator in this example includes the following steps:
(1) 2 g of doped graphene oxide was uniformly dispersed in 100 g of water, and ultrasonic dispersion was performed for 2 h to obtain a uniform dispersion solution.
(2) 0.1 g of sodium carboxymethyl cellulose (sodium carboxymethyl cellulose was used as a binder and a thickener, where the binder and the thickener each were 0.05 g of sodium carboxymethyl cellulose) and 0.1 g of hydrolyzed polymaleic anhydride were added to the dispersion solution obtained in (1), and magnetic stirring was performed at 800 rpm for 2 h to obtain slurry including the doped graphene oxide.
(3) The slurry obtained in (2) was uniformly scraped onto a polypropylene (PP) film with a thickness of 7 µm, and hot pressing and vacuum drying were performed to obtain a separator in this example. A temperature of the hot pressing was 120°C, a pressure of the hot pressing was 5 MPa, and a time of the hot pressing was 5 min. A temperature of the vacuum drying was 100°C, and a time of the vacuum drying was 12 hours. A weight average molecular weight of the polypropylene ranged from 100,000 to 1,000,000.

In this example, one separator substrate is provided, and the separator has a structure of "separator substrate-modification layer". A thickness of the separator was 10 µm, and a thickness of the modification layer was 3 µm.

### Example 15

Compared with Example 14, this example is different in that the thickness of the polypropylene film is 14 µm. The thickness of the separator was 17 µm, and the thickness of the modification layer was 3 µm.

### Comparative example 1

Compared with Example 1, this comparative example is different in that the doped graphene oxide is replaced with undoped graphene oxide.

### Comparative example 2

Compared with Example 1, this comparative example is different in that the doped graphene oxide is replaced with graphene.

### Comparative example 3

Compared with Example 1, this comparative example is different in that no doped graphene oxide was added to the slurry.

### Comparative example 4

Compared with Example 1, this comparative example is different in that the dopant atoms F are replaced with gallium (Ga) with an electronegativity of 1.81.

### Test example

(1) Test of peel strength of a separator: A standard adhesive tape (31B) with a width of 20 mm was attached to a surface of the separator at a fixed stress (2 kg, 300 mm/min) by using a roller press, a 180-degree peeling test was performed at a speed of 300 mm/min by using a tensile tester, values of 50-point peel strength were obtained at test distances of 50 mm to 120 mm, and an average value was calculated. The peel strength is used for indicating a degree of bonding between a modification layer and a separator substrate, and the greater the peel strength is, the better the bonding between the modification layer and the separator substrate is. Results are shown in Table 1.
(2) Test of a wetting angle of a separator: A separator to be tested was cut into a size of 50 mm×50 mm, 1 ml of a standard electrolytic solution was dropped on the sample, and an angle formed between the drop and the separator was observed with a contact angle meter. The standard electrolytic solution was an electrolytic solution formed by dissolving 1 mol/L of LiPF₆ in ethylene carbonate, ethyl methyl carbonate, and dimethyl carbonate mixed with a weight ratio of 1:1:1. Results are shown in Table 1.
(3) Test of an electrolytic solution absorption rate of a separator: The separator was soaked in the electrolytic solution for 60 min, and was taken out for air drying to measure a weight of the separator every 10 min. An electrolytic solution absorption rate may be obtained from (a weight of the separator after absorption - an initial weight of the separator)/the initial weight of the separator. The higher the electrolytic solution absorption rate is, the better the separator wettability is. Results are shown in Table 1.
(4) Test of rate performance of a battery corresponding to a separator:
1) A CR2025 button battery was used for a discharge rate test, and lithium iron phosphate was used as a positive electrode of the battery, where a ratio of lithium iron phosphate:conductive carbon black:PVDF binder was 8:1:1. A lithium sheet was used as a negative electrode. 1 mol/L of LiPF₆ was used as an electrolytic solution, and a weight ratio of EC:DEC in a solvent was 1:1. The separator was the separator in the examples and comparative examples.
2) Charging condition: The battery was charged in a constant current-constant voltage mode (CC-CV mode) at room temperature. The battery was first charged at a fixed current of 0.5 C in a constant current mode until the voltage rose to 3.65 V, and then switched to a constant voltage mode until the current was 0.02 C, to fully charge the battery.
3) Discharging condition: The battery was discharged to 2.5 V in a constant-current mode at different discharge rates (C-rate: 0.1 C/5 C), and 100 cycles were repeated.
4) Coulombic efficiencies at different discharge rates after 100 cycles were calculated and recorded, and a coulombic efficiency = (discharge capacity/charge capacity) × 100%. Results are shown in Table 1.

**Table 1**

| | | | Modification layer | | | Separator substrate | | | Rate performance | | |
|---|---|---|---|---|---|---|---|---|---|---|---|
| | Dopant atoms | Doping amount | Thickness (µm) | Porosity | Porosity | Layer quantity | Peel strength | Wetting angle | Electrolytic solution absorption rate (%) | 1 C | 5 C |
| Example 1 | F | 3% | 3 | 15 | 60 | 2 | 25 | 15 | 211 | 96.5 | 91.5 |
| Example 2 | F | 3% | 3 | 9 | 60 | 2 | 24 | 16 | 207 | 95.9 | 90.3 |
| Example 3 | F | 15% | 3 | 14 | 60 | 2 | 27 | 17 | 198 | 94.8 | 89.7 |
| Example 4 | F | 1% | 3 | 10 | 60 | 2 | 22 | 16 | 209 | 94.3 | 89.5 |
| Example 5 | F | 10% | 3 | 12 | 60 | 2 | 28 | 13 | 225 | 96.9 | 92.4 |
| Example 6 | F | 3% | 5 | 11 | 60 | 2 | 24 | 14 | 217 | 96.2 | 91.1 |
| Example 7 | F | 3% | 8 | 13 | 60 | 2 | 24 | 15 | 208 | 94.2 | 89.2 |
| Example 8 | F | 3% | 1 | 12 | 60 | 2 | 23 | 18 | 202 | 94.1 | 90.2 |
| Example 9 | F | 0.5% | 3 | 10 | 60 | 2 | 23 | 17 | 204 | 92.5 | 89.7 |
| Example 10 | F | 18% | 3 | 12 | 60 | 2 | 29 | 14 | 210 | 92.8 | 89.9 |
| Example 11 | N | 6% | 3 | 11 | 60 | 2 | 24 | 16 | 205 | 95.6 | 89.7 |
| Example 12 | s | 4.65% | 3 | 9 | 60 | 2 | 23 | 17 | 192 | 95.4 | 89.9 |
| Example 13 | B | 6% | 3 | 9 | 60 | 2 | 20 | 19 | 190 | 94.0 | 88.3 |
| Example 14 | F | 3% | 3 | 11 | 60 | 1 | 21 | 17 | 202 | 93.1 | 88.7 |
| Example 15 | F | 3% | 3 | 14 | 60 | 1 | 23 | 18 | 201 | 92.6 | 88.1 |
| Comparative example 1 | / | / | 3 | 14 | 60 | 2 | 18 | 22 | 187 | 92.5 | 88.0 |
| Comparative example 2 | / | / | 3 | 13 | 60 | 2 | 17 | 34 | 158 | 92.0 | 87.3 |
| Comparative example 3 | / | / | 3 | 12 | 60 | 2 | / | 50 | 145 | 90.3 | 83.1 |
| Comparative example 4 | Ga | 3% | 3 | 14 | 60 | 2 | 17 | 20 | 194 | 92.4 | 86.5 |

It can be seen from Table 1 that when the electronegativity of the dopant atoms in the doped graphene oxide is greater than or equal to 2, the corresponding battery can obtain higher rate performance. Further, it can be seen from Example 1, Example 3, Example 4, Example 9, and Example 10 that when the mass percentage of the dopant atoms in the doped graphene oxide ranges from 1% to 15%, the battery can exhibit better rate performance.

The technical features in the foregoing embodiments may be randomly combined. For simplicity of description, all possible combinations of the technical features in the foregoing embodiments are not described. However, it should be considered that these combinations of technical features fall within the scope recorded in the specification provided that these combinations of technical features do not have any conflict.

The foregoing embodiments only describe several embodiments of this application, and their description is specific and detailed, but cannot therefore be understood as a limitation to the scope of the claims of the present invention. It should be noted that for persons of ordinary skill in the art, several variations and improvements may further be made without departing from the concept of this application. These variations and improvements should also be deemed as falling within the scope of protection of this application. Therefore, the scope of protection of the patent of this application shall be subject to the appended claims.

## Claims

1. A separator, comprising a first separator substrate and a modification layer disposed on a surface of the first separator substrate, wherein the modification layer contains doped graphene oxide, and an electronegativity of dopant atoms in the doped graphene oxide is greater than or equal to 2.

2. The separator according to claim 1, wherein the doped graphene oxide satisfies at least one of the following features (1) to (3):
(1) a mass percentage of the dopant atoms in the doped graphene oxide ranges from 1% to 15%;
(2) the dopant atoms comprise at least one of F atoms, N atoms, S atoms, and B atoms; and
(3) the doped graphene oxide comprises at least one of particle doped graphene oxide and sheet doped graphene oxide, wherein
optionally, Dv50 of the particle doped graphene oxide ranges from 0.5 µm to 5 µm; and
optionally, the sheet doped graphene oxide has a thickness ranging from 0.5 nm to 3 nm and a sheet diameter ranging from 0.2 µm to 10 µm.

3. The separator according to claim 1 or 2, wherein the modification layer satisfies at least one of the following features (1) and (2):
(1) a porosity of the modification layer ranges from 5% to 30%; and
(2) a thickness of the modification layer ranges from 2 µm to 5 µm.

4. The separator according to any one of claims 1 to 3, wherein the first separator substrate satisfies at least one of the following features (1) to (3):
(1) a material of the first separator substrate comprises a polymer material, wherein
optionally, the polymer material comprises at least one of polypropylene, polyethylene, polyamide, polyester, polytetrafluoroethylene, polyvinylidene fluoride, and polyvinyl chloride; and
further optionally, a weight average molecular weight of the polymer material ranges from 100,000 to 1,000,000;
(2) a porosity of the first separator substrate ranges from 40% to 80%; and
(3) a thickness of the first separator substrate ranges from 3 µm to 30 µm, wherein
optionally, the thickness of the first separator substrate ranges from 5 µm to 25 µm.

5. The separator according to any one of claims 1 to 4, further comprising a second separator substrate, wherein the second separator substrate is disposed on a surface of the modification layer away from the first separator substrate.

6. The separator according to claim 5, wherein the second separator substrate satisfies at least one of the following features (1) to (3):
(1) a material of the second separator substrate comprises a polymer material, wherein
optionally, the polymer material comprises at least one of polypropylene, polyethylene, polyamide, polyester, polytetrafluoroethylene, polyvinylidene fluoride, and polyvinyl chloride; and
further optionally, a weight average molecular weight of the polymer material ranges from 100,000 to 1,000,000;
(2) a porosity of the second separator substrate ranges from 40% to 80%; and
(3) a thickness of the second separator substrate ranges from 3 µm to 30 µm, wherein
optionally, the thickness of the second separator substrate ranges from 5 µm to 25 µm.

7. The separator according to any one of claims 1 to 6, wherein the modification layer further contains a binder, wherein
optionally, the binder comprises at least one of sodium carboxymethyl cellulose, styrene-butadiene rubber, and polyvinylidene fluoride; and
optionally, a mass ratio of the binder to the doped graphene oxide ranges from (0.01 to 0.05):1.

8. The separator according to any one of claims 1 to 7, wherein the modification layer further contains a dispersant, wherein
optionally, the dispersant comprises at least one of polyethyleneimine and derivatives thereof, hydrolyzed polymaleic anhydride, acrylic acid block polymer, polyester block polymer, and polyethylene glycol; and
optionally, a mass ratio of the dispersant to the doped graphene oxide ranges from (0.01 to 0.08):1.

9. The separator according to any one of claims 1 to 8, wherein the modification layer further contains a thickener, wherein
optionally, the thickener comprises at least one of carboxymethylcellulose sodium, methyl cellulose, hydroxyethyl cellulose, hydroxypropyl methyl cellulose, polyacrylate, polyurethane, and polyether; and
optionally, a mass ratio of the thickener to the doped graphene oxide ranges from (0.005 to 0.05):1.

10. A preparation method of a separator, comprising the following steps:
applying slurry comprising doped graphene oxide to a surface of a first separator substrate and curing same to form a modification layer that contains the graphene oxide on the corresponding surface of the first separator substrate, wherein an electronegativity of dopant atoms in the doped graphene oxide is greater than or equal to 2.

11. The preparation method of a separator according to claim 10, wherein after the applying slurry comprising doped graphene oxide to a surface of a first separator substrate, the method further comprises the following step before the curing:
covering a surface of the slurry with a second separator substrate.

12. The preparation method of a separator according to claim 10 or 11, wherein the curing comprises hot pressing and drying performed sequentially.

13. The preparation method of a separator according to claim 12, wherein the hot pressing satisfies at least one of the following features (1) to (3):
(1) a temperature of the hot pressing ranges from 120°C to 150°C;
(2) a pressure of the hot pressing ranges from 3 MPa to 8 MPa; and
(3) a time of the hot pressing ranges from 1 min to 5 min.

14. The preparation method of a separator according to claim 12 or 13, wherein the drying satisfies at least one of the following features (1) to (3):
(1) a temperature of the drying ranges from 90°C to 120°C;
(2) a time of the drying ranges from 6 h to 12 h; and
(3) the drying is carried out under a vacuum condition.

15. A battery, comprising the separator according to any one of claims 1 to 9 or a separator prepared by using the preparation method of a separator according to any one of claims 10 to 14.

16. A power consuming apparatus, comprising the battery according to claim 15.
